# EUROPEAN PATENT APPLICATION

(11) **EP 2 009 301 A2**
(43) Date of publication of application: **31.12.2008**
(21) Application number: 08159051.5
(22) Date of filing: 25.06.2008
(51) Int. Cl.: F16C 33/38, F16C 33/44

(54) **Cage for a rolling element bearing having two rings joined by riveting**

(30) Priority: 28.06.2007 US 770300
(71) Applicant: Honeywell International Inc., Morristown NJ 07960 (US)
(72) Inventor: Bridges, Eric B., Tempe, AZ 85282 (US)
(74) Representative: Buckley, Guy Julian

(57) **Abstract**

The present invention provides a separator (122) for use in a roller element bearing assembly including two identical separator rings (124,126), each having a plurality of cooperating cut-out portions (134) formed at predetermined intervals and circumferentially about an outer planar surface (132). A decrease in the thickness of the two separator rings is realized at the cut-out portions (134). A plurality of rivets (130) are positioned within the plurality of cooperating cut-out portions (134) to clamp the two separator rings (124,126) together. The decrease in the thickness of the separator rings where the rivets are positioned enables shorter rivets to be used, thus minimizing buckling of the rivets and fracture of the rings, as well as a continuous un-interrupted piloting surface.

## Description

### TECHNICAL FIELD

The present invention relates generally to bearing assemblies and more specifically to bearing assemblies including improved riveted separators.

### BACKGROUND

High speed rolling element bearings typically include high strength separators (cages) to maintain relative position of the rolling elements during high speed bearing operation. In many instances, these separators are formed from sheet metal using stamping dies. These stamped sheet metal separators may be susceptible to fractures due to demanding bearing operating environments, inherent material brittleness and residual stress due to fabrication that results in the tendency for crack propagation and fatigue fracture in the separator. In addition, due to the high initial cost and proprietary nature of the stamping dies used to fabricate the sheet metal separators, transitioning from one supplier to another presents challenges.

As a way of overcoming some of the problems inherent to these sheet metal separators, two-piece machined separators have been commonly used in rolling element bearings. Machined separators include two separator halves that are machined from bar stock as opposed to being formed from sheet metal. The resulting separator structure is stronger and less vulnerable to fracture and the development of brittle properties during the manufacturing process. In addition, two-piece machined separators can be made without the need for special tooling or stamping dies. The result is reduced risk of separator fracture and a design that is easier and faster to transition to a wider range of candidate bearing suppliers. However, with the two-piece machined separator design, longer rivets may be used to hold the two pieces together. Due to this longer rivet length, there may be a reliability concern due to the potential of rivet fracture. More specifically, the longer rivets may buckle during the assembly and heading process used to hold them in place. If excessive buckling occurs, the two pieces of the separator may not be adequately clamped together and relative motion induced by bearing operation may result in rivet failure.

Thus, there is a need for a bearing separator assembly that includes multiple machined pieces, while substantially eliminating relative motion between the pieces of the separator assembly through reliable clamping. Moreover, there is a need for a bearing separator assembly that overcomes the potential for rivet buckling, resulting in a non-reliable assembly. Furthermore, other desirable features and characteristics of the present invention will become apparent from the subsequent detailed description of the invention and the appended claims, taken in conjunction with the accompanying drawings and this background of the invention.

### BRIEF SUMMARY

The present invention provides a rolling element bearing assembly with an improved riveted separator.

In one embodiment, and by way of example only, the separator comprises a first separator ring having an outer diameter, an inner diameter, and an axial thickness extending from an outer planar surface to an inner planar surface and a second separator ring having an outer diameter, an inner diameter, and an axial thickness extending from an outer planar surface to an inner planar surface, the inner planar surface of the first separator ring positioned adjacent the inner planar surface of the second separator ring in a plane normal to an axis of symmetry of the separator. The separator further comprises: a plurality of equally spaced ball pockets formed in the first and second separator rings and having a ball positioned therein each of the plurality of ball pockets; a plurality of cooperating cut-out portions formed at predetermined intervals and spaced circumferentially about the outer planar surface of each of the first and second separator rings, the plurality of cooperating cut-out portions being equally spaced between the plurality of equally spaced ball pockets; and a plurality of rivets, positioned within the plurality of cooperating cut-out portions and clamping the first separator to the second separator.

In another embodiment, and still by way of example only, the separator comprises a first separator ring having an outer circumferential surface, an inner circumferential surface, and an axially extending thickness extending from an outer planar surface to an inner planar surface and a second separator ring having an outer circumferential surface, an inner circumferential surface, and an axially extending thickness extending from an outer planar surface to an inner planar surface, the inner planar surface of each of the first and second separator rings positioned adjacent in a plane normal to an axis of symmetry of the separator. The separator further comprises: a plurality of cooperating cut-out portions extending axially along a portion of the thickness of each of the first and second separator rings and at predetermined intervals about the outer planar surfaces of the first and second separator rings, each of the cooperating cut-out portions including a rivet aperture formed therein; and a plurality of rivets, each positioned within a rivet aperture and the cooperating cut-out portions to clamp the first separator to the second separator.

In yet another embodiment, and by way of example only, the separator comprises two separator rings each including an outer circumferential surface, an inner circumferential surface, and an axially extending thickness extending from an outer planar surface to an inner planar surface, wherein the inner planar surface of each of the first and second separator rings are positioned adjacent in a plane normal to an axis of symmetry of the separator. The separator further comprises: a plurality of cooperating cut-out portions extending axially along a portion of the thickness of each of the two separator rings and at predetermined intervals about the outer planar surface of each of the two separator rings, each of the cooperating cut-out portions including a rivet aperture formed therein; and a plurality of rivets, each positioned within the cooperating cut-out portions to clamp the first separator to the second separator.

Other independent features and advantages of the preferred method will become apparent from the following detailed description, taken in conjunction with the accompanying drawings which illustrate, by way of example, the principles of the invention.

### BRIEF DESCRIPTION OF THE DRAWINGS

FIG. 1 is top view of a ball bearing assembly, including a separator;

FIG. 2 is sectional view taken through line 2-2 of FIG. 1;

FIG. 3 is a side view of a portion of the separator of FIGs. 1 and 2;

FIG. 4 is a side view of a portion of another embodiment of a bearing assembly;

FIG. 5 is a top view of another embodiment of a bearing assembly, including a separator;

FIG. 6 is a is a sectional view taken through line 6-6 of FIG. 5; and

FIG. 7 illustrates a side view of a portion of the bearing assembly of FIGs. 5 and 6.

### DETAILED DESCRIPTION OF A PREFERRED EMBODIMENT

The following detailed description of the invention is merely exemplary in nature and is not intended to limit the invention or the application and uses of the invention. Furthermore, there is no intention to be bound by any theory presented in the preceding background of the invention or the following detailed description of the invention. It is to be appreciated that the described embodiment is not limited to use in conjunction with a particular type of bearing assembly, or even to use in an airplane engine. Thus, although the present embodiments are, for convenience of explanation, depicted and described as being implemented in a bearing assembly for an airplane engine, it will be appreciated that they can be implemented in various other systems and environments, such as, for example, in auxiliary power units, gearboxes, machine tools, etc.

Broadly, the present invention provides a riveted separator for use with a bearing assembly which may have an improved design for riveting the separator components together, thereby decreasing the likelihood of failure of the rivets and increasing the lifespan of the bearing assembly. The bearing separator, or cage, of the present invention may be formed as a part of a bearing assembly useful in high speed turbo machinery such as, but not limited to, high-speed gas turbine engines, machine tool spindles, turbo-pumps, and gas compressors.

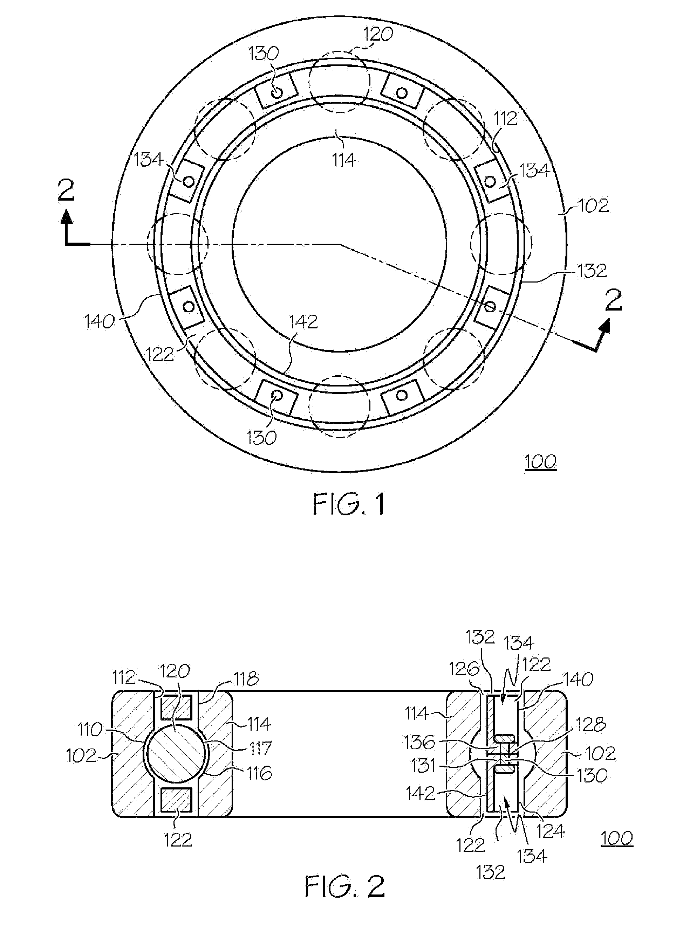

Referring now to FIGs. 1 and 2, illustrated is a ball bearing assembly 100 comprised of an outer ring 102 with a raceway 110 formed on its radially inner surface 112, an inner ring 114 with a raceway 116 formed on its radially outer surface 118. A plurality of balls 120 are positioned adjacent the raceway 116 and the raceway 110. A separator 122 formed of two ring-like structures, is positioned to maintain spacing of the ball bearings 120 within the races 116 and 110. The separator 122 may additionally retain lubrication within the ball bearing assembly 100. The separator 122 forms a cage-like structure about the ball bearings 120 and is frequently referred to as a bearing cage. During fabrication, in contrast to sheet metal separators where each ball pocked is formed by the stamping die, in the present machined separator, each ball 120 fits inside a radial cylindrical hole, or ball pocked 117, drilled into the separator 122.

The separator 122 as previously stated is generally comprised of two identical ring-like parts 124 and 126 concentrically disposed between the outer ring 102 and inner ring 114. The ring-like parts, and more particularly a first separator ring 124 and a second separator ring 126, are preferably formed by machining the parts from a bar stock material, such as bronze, steel, phenolic, Torlon®, Vespel®, polyetheretherketones (PEEK), nylon, carbon composites, metal matrix composites, aluminum, or the like. The first and second separator rings 124 and 126 are assembled together with their axially inner faces 128 meeting in a plane normal to the axis of symmetry of the separator 122 and the ball bearing assembly 100. When ball bearings 120 are properly positioned within the separator 122, the axially inner faces 128 bisect the ball bearings 100. In this preferred embodiment, the first separator ring 124 and the second separator ring 126 are held together by a plurality of rivets 130 preferably formed of a steel or aluminum material with the necessary strength and sufficient ductility to allow the forming of heads on the rivets during bearing assembly.

The first separator ring 124 and the second separator ring 126 each have a plurality of cut-out portions 134 formed therein and extending axially into an outer planar surface 132 thereof, equally spaced around the rings 124 and 126. Each of the plurality of cut-out portions 134 of the first separator ring 124 cooperates with a corresponding one of the cut-out portions 134 of the second separator ring 126. These cut-out portions 134 are spaced equally between the ball pockets 117. A plurality of cooperating apertures 136 are formed through the first separator ring 124 and the second separator ring 126 in corresponding alignment with the plurality of cut-out portions 134 and ball pockets 117. The plurality of rivets 130 are positioned within the cut-out portions 134 and extend through apertures 136 to provide clamping of the first separator ring 124 to the second separator ring 126. The plurality of cut-out portions 134 allow a reduction in the length of the rivet 130 and in particular a shank 131 by reducing the axial thickness of the separator 122 at that point. By allowing a reduction in rivet length, buckling of the rivet during the heading process is avoided, and the rivets are ensured of providing clamping of the two separator rings.

In the embodiment illustrated in FIGs. 1 and 2, the plurality of cut-out portions 134 are formed extending from an outer perimeter surface 140 of each of the first and second separator rings 124 and 126 to a point near the inner diameter surface 142 of each of the first and second separator rings 124 and 126. More specifically, the cut-out portions 134 are machined axially into and radially across a portion of the outer planar surface 132 of each of the first and second separator rings 124 and 126. The cut-out portions 134 do not extend across the entire radial cross section or axial thickness of the first and second separator rings 124 and 126.

In the embodiment illustrated in FIGs. 1-2, the outer perimeter surface 140 may also be referred to as non-piloting surfaces. The inner diameter surfaces 142 provide a contact surface between the inner ring 114 and the separator 122 and define a piloting surface. The cut-out portions 134 do not penetrate the inner diameter surface 142, and thereby enable an uninterrupted piloting surface used to maintain centerline control of the separator 122. The fact that the inner diameter surface 142 is left uninterrupted by cut-outs portions 134 facilitates the formation of a lubricant film between the inner ring surface 118, and the inner diameter surface 142. It should be understood that although the inner diameter surfaces 142 are illustrated in FIGs. 1 and 2 as the piloting surface, in an alternative embodiment, the plurality of cut-out portions 134 may be formed extending radially from an inner diameter surface 142 toward the outer perimeter surfaces 140. In this instance, the outer perimeter surface 140 would serve as the smooth un-interrupted piloting surface.

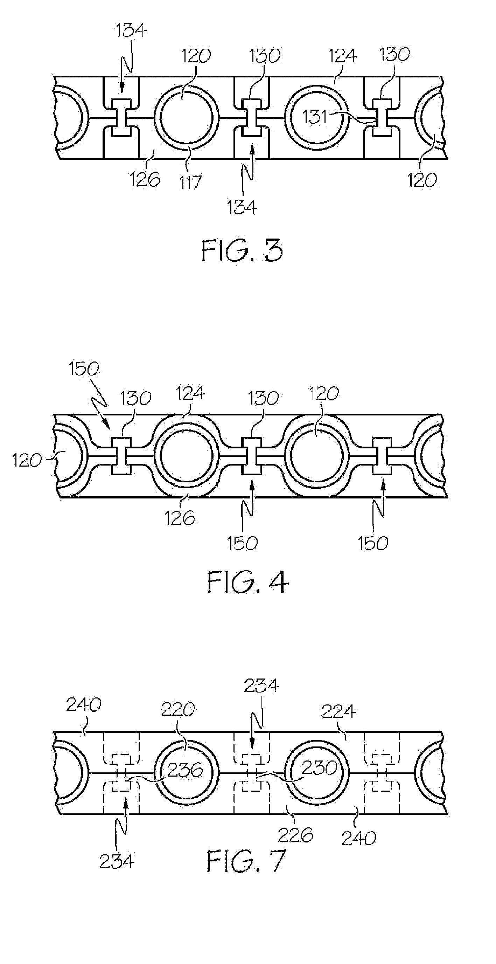

FIG. 3 illustrates a side view of a portion of the separator 122 of FIGs. 1 and 2. More specifically, illustrated are the plurality of cut-out portions 134 that are formed in the first separator ring 124 and the second separator ring 126. The plurality of cut-out portions 134 are formed about the outer perimeter surface 140, or non-piloting surface of the first separator ring 124 and the second separator ring 126. FIG. 4 illustrates an alternative embodiment in which a plurality of cut-out portions 150, generally similar to the cut-out portions 134 of FIGs. 1-3, are formed in the outer perimeters of the first and second separator rings 124 and 126 in a manner that closely follows the curvature of the plurality of ball bearings 120 positioned within the separator 122. When the plurality of cut-out portions 150 are formed in this manner, such as by machining, the weight of separator 122 may be reduced through the subtraction of additional separator material.

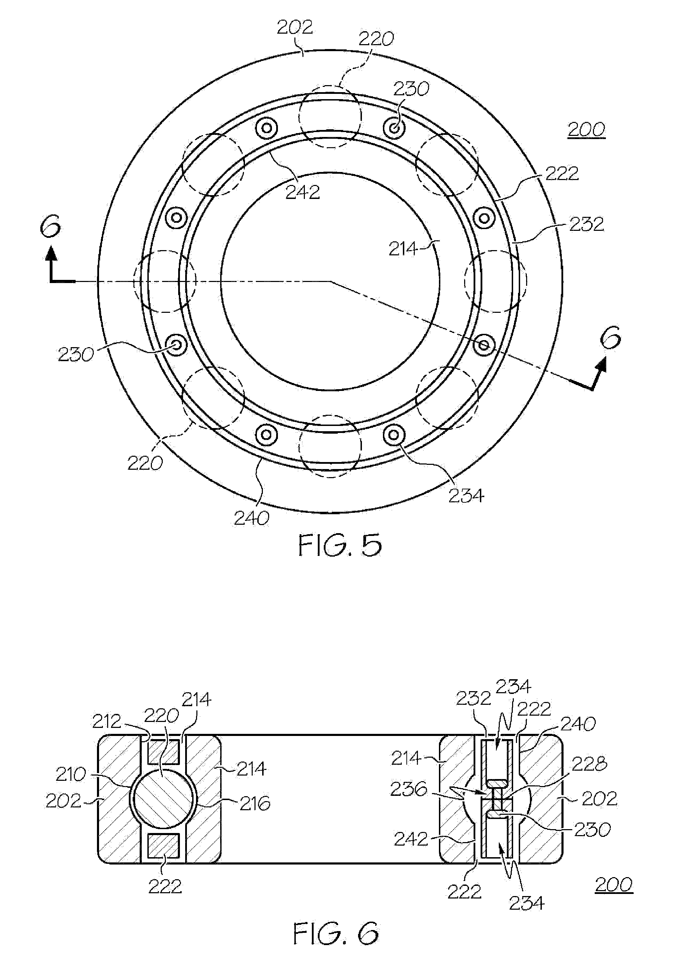

In yet another alternative embodiment illustrated in FIGs. 5-7 is a ball bearing assembly 200 comprised of an outer ring 202 with a raceway 210 formed on its radially inner surface 212, an inner ring 214 with a raceway 216 formed on its radially outer surface 218. A plurality of balls 220 are positioned adjacent the raceway 216 and the raceway 218. A separator 222 formed of two ring-like structures, is positioned to maintain spacing of the balls 220 within the races 216 and 217 As previously described with respect to FIGs. 1-4, the separator 222 forms a cage-like structure about the balls 220.

The separator 222 is generally comprised of two identical ring-like parts 224 and 226 concentrically disposed between the outer ring 202 and inner ring 214, and identified as a first separator ring 224 and a second separator ring 226. The first and second separator rings 224 and 226 are assembled together with their axially inner faces 228 meeting in a plane normal to the axis of symmetry of the separator 222 and the ball bearing assembly 200. In this embodiment, the first separator ring 224 and the second separator ring 226 are held together by a plurality of rivets 230.

The first separator ring 224 and the second separator ring 226 each have a plurality of cut-out portions 234 formed therein and extending axially into an outer planar surface 232 thereof, equally spaced around the rings 224 and 226. Each of the plurality of cut-out portions 234 of the first separator ring 224 cooperates with a corresponding one of the cut-out portions 234 of the second separator ring 226. In this particular embodiment, the cut-out portions 234 are formed as counterbores and extend axially from the outer planar surface 232 of each of the first and second separator rings 224 and 226 through a portion of the thickness. A plurality of cooperating apertures 236 are formed through the first separator ring 224 and the second separator ring 226 in corresponding alignment with the plurality of cut-out portions 234. The plurality of rivets 230 are positioned within the cut-out portions 234 and extend through apertures 236 to provide clamping of the first separator ring 224 to the second separator ring 226. The cut-out portions 234 allow a reduction in the length of the rivet 130 and in particular a shank 131 by reducing the axial thickness of the separator 122 at that point. By allowing a reduction in rivet length, buckling of the rivet during the heading process is avoided, and the rivets are ensured of providing clamping of the two separator rings.

In the embodiment illustrated in FIGs. 5-7, the plurality of cut-out portions 234, or counterbores, are formed axially from the outer planar surfaces 232 of the first and second separator rings 224 and 226 through a portion of the thickness of the rings 224 and 226. In contrast to the embodiments described in FIGs. 1-4, the plurality of cut-out portions 234, or counterbores, do not interfere with the outer perimeter surfaces 240 of the first and second separator rings 224 and 226 or the inner diameter surfaces 242 of the first and second separator rings 224 and 226 and thereby enables smooth piloting on either of these surfaces to be maintained in the bearing assembly 200 while providing for a decrease in the thickness of the first and second separator rings 224 and 226 at specific points.

FIG. 7 illustrates a side view of a portion of the separator 222 of FIGs. 5 and 6. More specifically, illustrated are the plurality of cut-out portions 234, or counterbores, that are formed through a portion of the first separator ring 224 and the second separator ring 226. The plurality of cut-out portions 234 are formed about the outer perimeters 240 of the first separator ring 224 and the second separator ring 226 and do not come in contact with the inner piloting surface 242 or the outer piloting surface 240.

There has now been provided a rolling element bearing assembly with an improved two-piece riveted separator. The riveted separator is relatively inexpensive and simple to fabricate and position within the bearing assembly. Moreover, the riveted separator allows the primary failure mode in two piece machined riveted separators, caused by the buckling of the rivets used to clamp together the two-pieces of the separator, to be substantially eliminated through the use of shorter rivets. More specifically, the overall axial thickness of the two-piece separator at the point of clamping with the rivets is substantially decreased, providing less rivet buckling, and the maintenance of axial clamp load between the two separator halves.

While the invention has been described with reference to preferred embodiments, it will be understood by those skilled in the art that various changes may be made and equivalents may be substituted for elements thereof without departing from the scope of the invention. In addition, many modifications may be made to adapt to a particular situation or material to the teachings of the invention without departing from the essential scope thereof. Therefore, it is intended that the invention not be limited to the particular embodiment disclosed as the best mode contemplated for carrying out this invention, but that the invention will include all embodiments falling within the scope of the appended claims.

## Claims

1. A separator (122) for a rolling element bearing assembly (200), the separator (122) comprising:
a first separator ring (124) having an outer diameter, an inner diameter, and an axial thickness extending from an outer planar surface (132) to an inner planar surface (142);
a second separator ring (126) having an outer diameter, an inner diameter, and an axial thickness extending from an outer planar surface (132) to an inner planar surface (142), the inner planar surface (142) of the first separator ring (124) positioned adjacent the inner planar surface (142) of the second separator ring (126) in a plane normal to an axis of symmetry of the separator (122);
a plurality of equally spaced ball pockets (117) formed in the first and second separator rings (124 and 126) and having a ball (120) positioned therein each of the plurality of ball pockets (117);
a plurality of cooperating cut-out portions (134) formed at predetermined intervals and spaced circumferentially about the outer planar surface (132) of each of the first and second separator rings (124 and 126), the plurality of cooperating cut-out portions (134) being equally spaced between the plurality of equally spaced ball pockets (117); and
a plurality of rivets (130), positioned within the plurality of cooperating cut-out portions (134) and clamping the first separator ring (124) to the second separator ring (126).

2. A separator (122) as claimed in claim 1, wherein the first separator ring (124) and the second separator ring (126) are machined rings.

3. A separator (122) as claimed in claim 2, wherein the first separator ring (124) and the second separator ring (126) are machined rings formed of at least one of bronze, steel, phenolic, Torlon®, Vespel®, polyetheretherketones (PEEK), nylon, carbon composites, metal matrix composites, or aluminum.

4. A separator (122) as claimed in claim 1, further including a non-piloting surface (140) and a piloting surface (142) defined by the first and second separator rings (124 and 126).

5. A separator (122) as claimed in claim 1, wherein the a plurality of cooperating cut-out portions (134) extend axially along a portion of the thickness of each of the first and second separator rings (124 and 126)

6. A separator (122) as claimed in claim 1, wherein the plurality of cooperating cut-out portions (134) extend axially along a portion of the thickness of each of the first and second separator rings (124 and 126) and radially across a portion of the outer planar surfaces (132) and through the outer diameter of each of the first and second separator rings (124 and 126).

7. A separator (122) for a rolling element bearing assembly (200), the separator (122) comprising:
a first separator ring (124) having an outer circumferential surface, an inner circumferential surface, and an axially extending thickness extending from an outer planar surface (132) to an inner planar surface (142);
a second separator ring (126) having an outer circumferential surface, an inner circumferential surface, and an axially extending thickness extending from an outer planar surface (132) to an inner planar surface (142), the inner planar surface (142) of each of the first and second separator rings (124 and 126) positioned adjacent in a plane normal to an axis of symmetry of the separator (122);
a plurality of cooperating cut-out portions (134) extending axially along a portion of the thickness of each of the first and second separator rings (124 and 126) and at predetermined intervals about the outer planar surfaces (132) of the first and second separator rings (124 and 126), each of the cooperating cut-out portions (134) including a rivet aperture (136) formed therein; and
a plurality of rivets (130), each positioned within a rivet aperture (136) and the cooperating cut-out portions (134) to clamp the first separator ring (124) to the second separator ring (125).

8. A separator (122) as claimed in claim 7, wherein the plurality of cooperating cut-out portions (134) further extend radially across a portion of the outer planar surfaces (132) and through the outer circumferential surface of each of the first and second separator rings (124 and 126).

9. A separator (122) as claimed in claim 7, wherein the plurality of cooperating cut-out portions (134) further extend radially across a portion of the outer planar surfaces (132) and through the inner circumferential surface of each of the first and second separator rings (124 and 126).

10. A separator (122) as claimed in claim 7, wherein the plurality of cut-out portions (134) are counterbores extending axially through at least a portion of the thickness of each of the first and second separator rings (124 and 126).
